# DEMANDE DE BREVET EUROPEEN

(11) **EP 0 649 763 A1**
(43) Date de publication de la demande: **26.04.1995**
(21) Numéro de dépôt: 94203018.0
(22) Date de dépôt: 17.10.1994
(51) Int. Cl.: B60C 25/132

(54) **Dispositif pour assister efficacement les opérations de montage et de démontage d'un pneu d'une jante de roue**

(30) Priorité: 22.10.1993 BE 9301128
(71) Demandeur: du Quesne, Francis, B-2630 Aartselaar (BE)
(72) Inventeur: du Quesne, Francis, B-2630 Aartselaar (BE)
(74) Mandataire: Ottelohe, Jozef René

(57) **Abrégé**

Le dispositif consiste en un levier (1) portant latéralement en saillie un sabot de pression (10) pour exercer une pression sur le talon du pneu, levier dont une extrémité est munie d'une poignée (2) et l'autre extrémité d'un pivot (3) auquel il est fixé en pivotement une broche (4), la barre réglable en hauteur (11) de l'appareil (12) est préréglée à la dimension de la roue à traïter étant pourvue d'un moyen (13) dans lequel la broche (4) est introduite de façon amovible de sorte que le levier (1) puisse pivoter dans un plan vertical et horizontal et que le sabot (10) du levier puisse prendre appui sur le flanc ou le talon supérieur du pneu (A) sans réglage préalable afin de presser ce talon dans le creux circonférentiel (19) de la roue, le bâti (14) étant muni d'un support montant (15) dans lequel la broche (4) est introduite de façon amovible de sorte que le levier puisse pivoter dans un plan vertical et horizontal et que le sabot (10) du levier (1) puisse prendre appui sur le talon inférieur du pneu afin de pousser vers le haut ce talon dans le creux circonférentiel (19) de la roue.

## Description

L'invention concerne un dispositif utilisé pour assister les opérations de montage et de démontage d'un pneu d'une jante de roue, cela plus particulièrement dans le cas de pneus très rigides de voitures de sport ou de compétition, présentant des difficultés lors de ces opérations en utilisant une machine ou un dispositif connu, prévu à cet effet.

Pour aider ainsi les talons du pneu au montage ou au démontage, on connaît déjà des dispositifs pourvus d'un vérin pneumatique ou hydraulique muni d'une roulette de pression, qui exerce une poussée sur les flancs ou les talons du pneu, afin de faciliter les opérations de montage et de démontage du pneu d'une jante de roue.

Ces dispositifs présentent toutefois l'inconvénient que le cylindre pneumatique ou hydraulique doît être suffisamment long, ce qui alourdit ces dispositifs et les rend plus coûteux et compliqués, à cause entre autres de la distance relativement longue à parcourir par la roulette de pression avant d'atteindre les talons du pneu.

En vue de remédier à ces inconvénients, et conformément à la principale caractéristique de l'invention, on a réalisé un dispositif tel que décrit dans les revendications.

Ce dispositif est simple, peu coûteux à fabriquer et comporte peu de pièces.

A titre d'exemple, sans aucun caractère limitatif, suit ci-dessous une description plus détaillée, d'une forme choisie de réalisation du dispositif conforme à l'invention. Cette description se réfère aux dessins annexés dans lesquels :

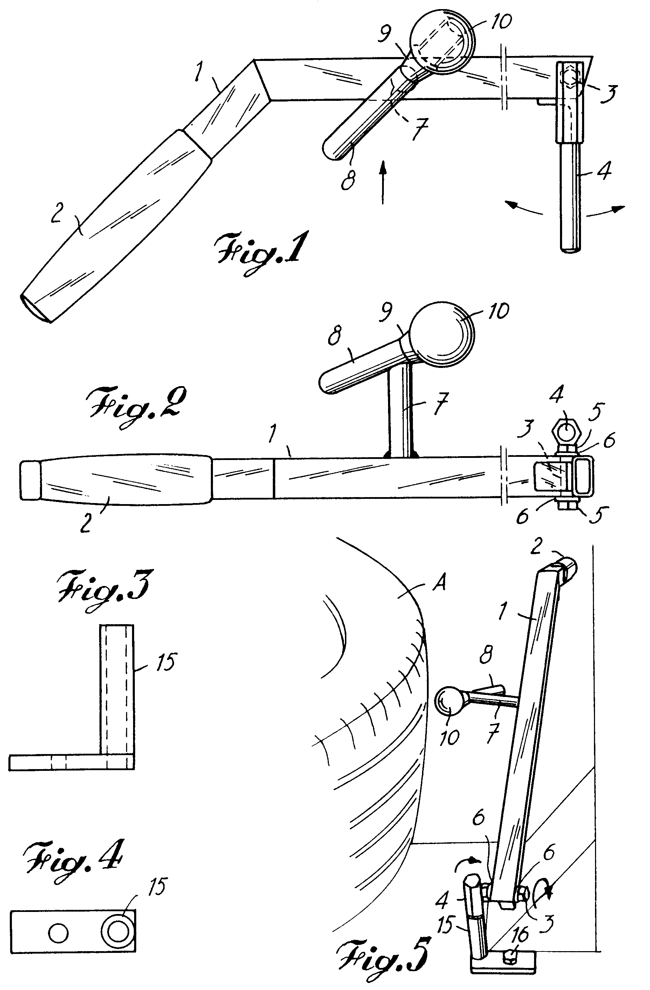

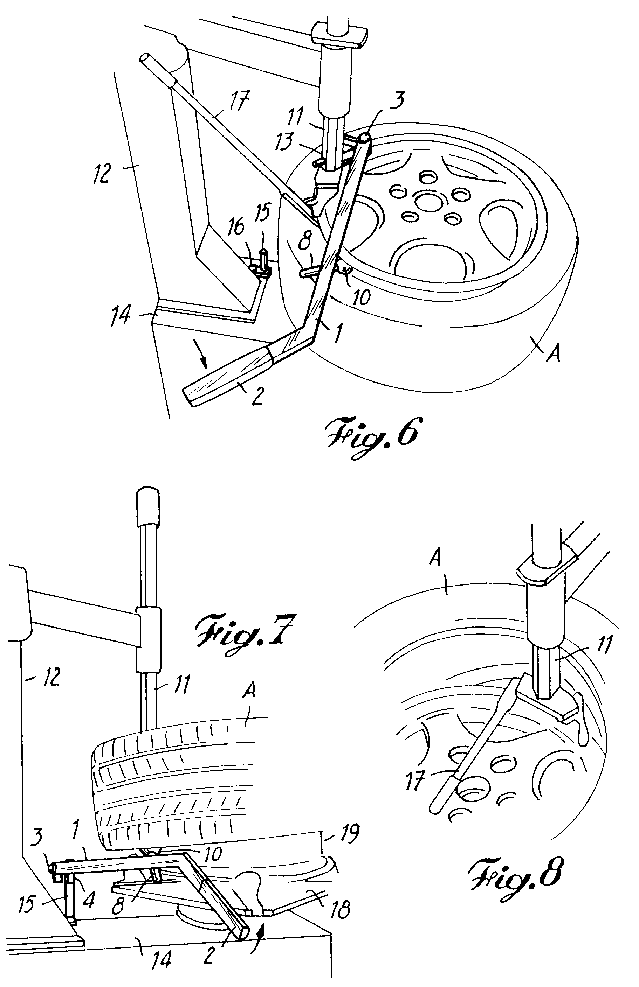

la figure 1 est une vue de dessous du dispositif conforme à l'invention;
la figure 2 en est une vue de face suivant la flèche I de la figure 1;
la figure 3 est une vue de profil du support dans lequel on peut introduire en pivotement le dispositif conforme à l'invention;
la figure 4 est une vue en plan de ce support;
la figure 5 est une vue en perspective du dispositif suivant l'invention, prêt à agir sur le talon inférieur d'un pneu;
la figure 6 est une vue en perspective du dispositif, tel qu'il est utilisé lorsqu'il agit sur le talon supérieur d'un pneu;
la figure 7 est une vue en perspective du dispositif tel qu'il est utilisé pour soulever le talon inférieur d'un pneu;
la figure 8 montre comment on démonte le talon inférieur du pneu, au moyen d'un levier et dispositif connu.

On remarque que le dispositif conforme à l'invention comprend un levier 1 dont une extrémité est munie d'une poignée 2 et l'autre extrémité est munie d'un pivot 3 auquel est fixée à pivotement une broche 4 au moyen d'écrous 5 et de rondelles élastiques 6 pour freiner le pivotement du levier. Entre le pivot 3 et la poignée 2 et perpendiculairement au levier 1 il est fixé une tige 7 se terminant en un élément de guidage 8 incliné dans un plan horizontal et vertical et présentant une partie conique 9 pour faciliter le guidage des talons du pneu lors des opérations. Sur la partie conique 9 il est monté un sabot de pression 10 qui a de préférence une forme sphérique et est fabriqué de préférence en matière plastique, afin de faciliter son introduction entre le talon du pneu et le bord de la roue. La barre 11 axialement déplaçable en hauteur d'une machine connue 12 pour le montage et le démontage de pneus, est pourvue d'une ouverture 13 dans laquelle on introduit en pivotement dans un plan vertical la broche 4 pour presser le talon supérieur du pneu au moyen du levier et du sabot 10. Sur le bâti 14 de l'appareil 12, il est fixé un support tubulaire 15 au moyen d'un boulon 16 et dans lequel on introduit en pivotement dans un plan horizontal la broche 4 pour soulever le talon inférieur du pneu au moyen du levier 1 et du sabot 10.

Pour assister les opérations de montage ou de démontage du talon supérieur d'un pneu très rigide A, on introduit en pivotement la broche 4 dans l'ouverture 13 de la barre déplaçable en hauteur 11 de l'appareil 12 et on pivote le levier 1 jusqu'à ce que le sabot 10 prenne appui sur le talon supérieur du pneu A, ensuite on exerce une pression sur le talon au moyen du sabot 10 et on pousse ce sabot entre le bord de la jante de roue et le talon du pneu, de sorte que ce talon soit poussé dans le creux circonférentiel 19 de la roue A. Cette position permet soit le montage du talon au moyen d'un outil connu qui équipe la barre 11, soit le démontage de ce talon en rendant possible l'introduction du levier connu 17 entre la jante de roue et le pneu. Après avoir basculé le levier 17, le talon étant passé sur l'outil de la barre 11 et la rotation de la table 18 et de la roue 19, provoque le démontage du talon sur toute sa périférie (fig. 6).

Pour agir sur le talon inférieur du pneu A, on introduit en pivotement la broche 4 dans le support 15 fixé sur le bâti 14 et on pivote le levier 1 jusqu'à ce que le sabot 10 prenne appui sur le talon inférieur du pneu A, ensuite on exerce une pression vers le haut sur ce talon au moyen du sabot 10 et on pousse ce sabot entre la jante de roue et le talon du pneu, de sorte que ce talon est poussé dans le creux circonférentiel 19 de la roue A (fig. 7). Lorsqu'on introduit ensuite le levier connu 17 entre la jante de roue et le talon du pneu en le faisant passer sur l'outil de la barre 11, la rotation de la table 18 de l'appareil 12 provoque le démontage de ce talon sur toute sa périférie (fig. 8).

Il va de soi que le sabot et les autres éléments du dispositif peuvent avoir n'importe quelles formes et dimensions et peuvent être remplacés par n'importe quels autres éléments qui poursuivent le même but.

## Revendications

1. Dispositif pour assister les opérations de montage et de démontage d'un pneu d'une jante de roue et coopérant avec une machine (12) pour le démontage et le montage de pneus, ladite machine comportant un bâti (14), une colonne montante fixée sur le bâti, un bras monté dans la colonne, une barre réglable en hauteur (11) dans le bras et portant un outil pour le démontage et le montage d'un pneu, et une table rotative à griffes (18) pour fixer la roue sur la table (18) placée sous l'outil, dispositif caractérisé par le fait qu'il consiste en un levier (1) portant latéralement en saillie un sabot de pression (10) pour exercer une pression sur le talon du pneu, levier dont une extrémité est munie d'une poignée (2) et l'autre extrémité d'un pivot (3) auquel il est fixé en pivotement une broche (4), la barre réglable en hauteur (11) de l'appareil (12) et préréglée à la dimension de la roue à traîter étant pourvue d'un moyen (13) dans lequel la broche (4) est introduite de façon amovible de sorte que le levier (1) puisse pivoter dans un plan vertical et horizontal et que le sabot (10) du levier puisse prendre appui sur le flanc ou le talon supérieur du pneu (A) sans réglage préalable afin de presser ce talon dans le creux circonférentiel (19) de la roue, le bâti (14) étant muni d'un support montant (15) dans lequel la broche (4) est introduite de façon amovible de sorte que le levier puisse pivoter dans un plan vertical et horizontal et que le sabot (10) du levier (1) puisse prendre appui sur le talon inférieur du pneu afin de pousser vers le haut ce talon dans le creux circonférentiel (19) de la roue.

2. Dispositif selon la revendication 1, caractérisé par le fait que sur le levier (1) est fixée perpendiculairement une tige (7) se terminant en un élément de guidage incliné (8) dans un plan horizontal et vertical, sur lequel est monté un sabot de pression (10).

3. Dispositif selon la revendication 2, caractérisé par le fait que le sabot de pression (10) a de préférence une forme sphérique.

4. Dispositif selon la revendication 3, caractérisé par le fait que le sabot de pression (10) est fabriqué en matière plastique.

5. Dispositif selon la revendication 2, caractérisé par le fait qu'une extrémité de l'élément de guidage (8) présente une partie conique (9) pour faciliter le guidage du talon du pneu à décoller et sur laquelle est montée le sabot de pression (10).

6. Dispositif selon la revendication 1, caractérisé par le fait que le support (15) consiste en un élément tubulaire fixé perpendiculairement sur une plaque fixée sur le bâti (14) d'un appareil connu (12) pour le montage et le démontage d'un pneu.

7. Dispositif selon la revendication 1, caractérisé par le fait qu'entre le levier (1) et la broche (4) sont placées des rondelles élastiques (6) afin de freiner le basculement du levier (1).

8. Dispositif selon la revendication 1, caractérisé par le fait que la barre réglable en hauteur (11) de l'appareil (12), est pourvue d'une ouverture (13) dans laquelle on introduit de façon amovible la broche (4).
